# EUROPÄISCHE PATENTSCHRIFT

(11) **EP 4 402 772 B1**
(45) Veröffentlichungstag und Bekanntmachung des Hinweises auf die Patenterteilung: **04.02.2026**
(21) Anmeldenummer: 22813610.7
(22) Anmeldetag: 09.11.2022
(51) Int. Cl.: H02J 50/10, H02J 50/80, H02J 7/35

(54) **VERFAHREN ZUR LEISTUNGSREGELUNG**
METHOD FOR POWER CONTROL
PROCÉDÉ DE COMMANDE DE PUISSANCE

(30) Priorität: 24.11.2021 DE 102021213231
(43) Veröffentlichungstag der Anmeldung: 24.07.2024
(73) Patentinhaber: Siemens Mobility GmbH, 80997 München (DE)
(72) Erfinder: PATZELT, Klaus, 85238 Petershausen (DE)
(74) Vertreter: Siemens Patent Attorneys
(86) Internationale Anmeldenummer: PCT/EP2022/081229
(87) Internationale Veröffentlichungsnummer: WO 2023/094150

(56) Entgegenhaltungen:
- CH-A5- 679 296
- US-A1- 2014 312 706
- RAIZADA SHIRISH ET AL: "Step Up Gain Converter with fast MPPT control under moving partial shading for train rooftop PV-DC- G", 2018 IEEE INTERNATIONAL CONFERENCE ON ELECTRICAL SYSTEMS FOR AIRCRAFT, RAILWAY, SHIP PROPULSION AND ROAD VEHICLES & INTERNATIONAL TRANSPORTATION ELECTRIFICATION CONFERENCE (ESARS-ITEC), IEEE, 7 November 2018 (2018-11-07), pages 1 - 6, XP033498184, DOI: 10.1109/ESARS-ITEC.2018.8607357

## Beschreibung

Die Erfindung betrifft ein Verfahren zur Regelung einer elektrischen Leistungsübertragung, die von einer Photovoltaik-Anlage eines Schienenfahrzeugs gebildet und zu einer elektrischen Komponente des Schienenfahrzeugs übertragen wird.

Es ist bekannt, bei einem Schienenfahrzeug eine Photovoltaik-Anlage, die an der äußeren Oberfläche des Schienenfahrzeugs angeordnet ist, einzusetzen. Dabei erfolgt eine Nutzung von Solarenergie, um eine elektrische Leistung zu bilden, die dann an eine elektrische Komponente bzw. Last (Verbraucher oder Speicher) im Inneren des Schienenfahrzeugs übertragen wird.

Es ist auch bekannt, bei einer Photovoltaik-Anlage eine Leistungsregelung mit Hilfe eines sogenannten "Maximum Power Point Tracking, MPPT"-Verfahrens durchzuführen, um Leistung von der Photovoltaik-Anlage zu einer damit verbundenen elektrischen Last (Verbraucher oder Speicher) zu übertragen.

Bei dieser Leistungsregelung wird für die Photovoltaik-Anlage bzw. für ein Solarmodul ein sogenannter "Maximum Power Point, MPP" als der Punkt einer zugehörigen Strom-Spannungs-Kennlinie ermittelt, an dem das Solarmodul eine maximale Leistung erbringt.

Der Maximum Power Point MPP ist von der Sonneneinstrahlung, von der Temperatur und von individuellen Moduleigenschaften abhängig, so dass er sich ständig ändern kann.

Die Ermittlung des Maximum Power Point MPP erfolgt mit Hilfe eines sogenannten MPP-Trackers MPPT, der schaltungstechnisch gesehen eine veränderliche elektrische Last der Photovoltaik-Anlage bildet, an die die Leistung der Photovoltaik-Anlage übertragen wird. Diese Last ist dann optimal eingestellt, wenn die dem Solarmodul entnommene maximale Leistung im Gleichgewicht zu der Leistung steht, die an der Last zur weiteren Verarbeitung benötigt bzw. verbraucht wird.

Realisiert wird der MPP-Tracker durch einen Wechselrichter, der Gleichspannung der Photovoltaik-Anlage in eine Wechselspannung für einen Netzbetrieb wandelt und der als Hochsetzer, Tiefsetzer oder Inverter geschaltet sein kann.

Ist anstelle des Netzbetriebs eine Speicherung der Leistung der Photovoltaik-Anlage vorgesehen, ist dem Wechselrichter ein Wandler nachgeschaltet, der aus der Wechselspannung eine Gleichspannung für den Energiespeicher (Batterie) bildet.

Beim MPPT-Verfahren wird also eine Leistungsübertragung derart geregelt bzw. eingestellt, dass der Photovoltaik-Anlage eine größtmögliche Leistung entnommen wird, um diese der elektrischen Last zuzuführen.

Das MPPT-Verfahren beruht auf der Auswertung von elektrischen Parametern (Strom, Spannung) längs der elektrisch leitend ausgebildeten Verbindung zwischen der Photovoltaik-Anlage und der Last. Die Parameter werden an der Photovoltaik-Anlage und an der mit ihr direkt verbundenen elektrischen Last überwacht bzw. gewonnen.

Beim Einsatz einer Photovoltaik-Anlage, die an der äußeren Oberfläche des Schienenfahrzeugs angeordnet ist, ist diese direkte, elektrisch leitende Verbindung zwischen der Photovoltaik-Anlage und der Last, die im Inneren des Schienenfahrzeugs angeordnet ist, ggf. aus Sicherheitsgründen nicht gewünscht. Ein geforderter Schutz des Innenraums des Schienenfahrzeugs vor Hochspannungseinträgen verhindert die Verwendung der direkten, elektrisch leitenden Verbindung zwischen Photovoltaik-Anlage und Komponente bzw. Last.

Damit entfällt auch die Möglichkeit der Anwendung des für die Photovoltaik-Anlage bekannten und oben beschriebenen MPPT-Verfahrens.

### Stand der Technik:

US 2014/312706 A1 zeigt induktive Leistungsübertragung von einer Photovoltaik-Anlage (unter anderem auf einem Zug) zu einem unter einem Dach liegenden Empfänger.

XP033498184 (RAIZADA SHIRISH ET AL: "Step Up Gain Converter with fast MPPT control under moving partial shading for train rooftop PV-DC- G") zeigt ein MPPT für eine Photovoltaik-Anlage auf einem Zug bei partieller Beschattung.

CH 679 296 A5 zeigt eine Photovoltaik-Anlage auf einem Zug.

Es ist daher die Aufgabe der vorliegenden Erfindung, ein Verfahren zur Regelung einer elektrischen Leistung, die von einer Photovoltaik-Anlage eines Schienenfahrzeugs gebildet und zu einer elektrischen Komponente bzw. Last des Schienenfahrzeugs übertragen wird, anzugeben.

Diese Aufgabe wird durch die Merkmale des Anspruchs 1 gelöst. Vorteilhafte Weiterbildungen der Erfindung sind in den abhängigen Ansprüchen angegeben.

Die Erfindung betrifft ein Verfahren zur Regelung einer Leistungsübertragung von einer Photovoltaik-Anlage zu einer elektrischen Komponente, die beispielsweise ein Verbraucher oder ein Speicher ist.

Die zur Leistungsbildung verwendete Photovoltaik-Anlage ist an einer äußeren Oberfläche des Schienenfahrzeugs angeordnet, während die elektrische Komponente im Inneren des Schienenfahrzeugs angeordnet ist.

Die Leistungsübertragung erfolgt über einen induktiven Übertrager, der zwischen der Photovoltaik-Anlage und der Komponente geschaltet ist. Dadurch wird eine galvanische Trennung zwischen der Photovoltaik-Anlage und der Komponente erreicht, so dass die Komponente vor Auswirkungen von Hochspannungsschäden, die an der Photovoltaik-Anlage wirken, geschützt ist.

Der induktive Übertrager überträgt Gleichspannung auf Gleichspannung und beinhaltet damit eine Serienschaltung aus einem DC/AC-Wandler, gefolgt von zwei induktiv miteinander gekoppelten Spulen und einem nachfolgenden AC/DC-Wandler.

Eine für die Übertragung zwischen der Photovoltaik-Anlage und der Komponente erforderliche Leistungsregelung ist zwischen dem induktiven Übertrager und der elektrischen Komponente und damit mit Blick auf den Übertrager sekundärseitig vorgesehen.

Die Leistungsregelung bestimmt, wieviel Leistung sekundärseitig vom Übertrager entnommen wird, um ein Regelziel zu gewährleisten.

Das Regelziel wiederum wird durch die elektrische Komponente bestimmt.

Handelt es sich bei der Komponente um eine Batterie, wird das Regelziel durch ein Ladevermögen bzw. Kapazität der Batterie und/oder durch eine beabsichtigte oder vorgegebene Ladezeit der Batterie bestimmt.

Erfindungsgemäß beruht die Leistungsregelung auf Parametern (Strom, Spannung und/oder Leistung), die ausschließlich zwischen dem induktiven Übertrager und der elektrischen Komponente zeitlich verfolgt und erfasst werden. Diese Seite wird in Bezug zum induktiven Übertrager als Sekundärseite bezeichnet.

Die Leistungsregelung selbst erfolgt über eine sekundärseitig wirkende Änderung einer Last. Diese Last wird derart angepasst, dass eine möglichst unterbrechungsfreie, maximierte Leistungsübertragung von der Photovoltaik-Anlage zur elektrischen Komponente erfolgt.

In aufeinanderfolgenden, bevorzugt iterativen, Schritten wird die Regelung der Leistungsübertragung basierend auf den sekundärseitigen Parametern durchgeführt.

Diese wird nachfolgend anhand einer Schrittfolge detailliert dargestellt:
In einem ersten Schritt wird zur sekundärseitigen Leistungsentnahme am induktiven Übertrager für diese Leistung ein Startwert bestimmt. Beispielsweise wird dazu für eine Ausgangsspannung des Übertragers ein Startwert vorgegeben, der die sekundärseitige Leistung repräsentiert.

In einem zweiten Schritt wird überprüft, ob die sekundärseitig angeforderte Leistung seitens des Übertragers primärseitig auch geliefert werden kann.

Erfolgt sekundärseitig ein Zusammenbruch der Ausgangsspannung des induktiven Übertragers, dann steht primärseitig zu wenig Leistung zur Übertragung zur Verfügung. In diesem Fall wird ein nachfolgend geschilderter fünfter Schritt durchgeführt. Erfolgt sekundärseitig jedoch kein Zusammenbruch der Ausgangsspannung des induktiven Übertragers, dann steht primärseitig ausreichend Leistung zur Übertragung zur Verfügung. In diesem Fall wird ein nachfolgend geschilderter dritter Schritt durchgeführt.

Im dritten Schritt wird geprüft, ob seitens der Komponente bzw. Last eine erhöhte Leistung verarbeitet werden könnte.

Ist dies nicht der Fall, wird die Leistungsübertragung unverändert fortgesetzt.

Ist dies der Fall, wird ein nachfolgend beschriebener vierter Schritt durchgeführt.

Im vierten Schritt wird diese erhöhte Leistung bestimmt bzw. berechnet und als neuer Startwert verwendet. Nachfolgend wird die geschilderte Schrittfolge beginnend beim zweiten Schritt erneut durchgeführt.

Im fünften Schritt, der bei der unterbrochenen Leistungsübertragung folgt, muss die sekundärseitige Leistungsentnahme reduziert werden.

Entsprechend wird ausgehend vom letzten Startwert dieser reduziert und als neuer Startwert verwendet. Nachfolgend wird die geschilderte Schrittfolge beginnend beim zweiten Schritt erneut durchgeführt.

Sowohl die Reduzierung als auch die Erhöhung wird durch Algorithmen angepasst.

In einer nicht mehr beanspruchen zweiten Ausgestaltung der Erfindung beruht die Leistungsregelung auf Parametern (Strom, Spannung und/oder Leistung), die (bevorzugt ausschließlich) zwischen der Photovoltaik-Anlage und dem induktiven Übertrager zeitlich verfolgt und erfasst werden. Diese Seite wird in Bezug zum induktiven Übertrager als Primärseite bezeichnet.

Bevorzugt werden diese Parameter direkt an der Photovoltaik-Anlage erfasst.

Die primärseitigen Parameter werden bevorzugt als Daten oder als repräsentierende Kennwerte unter Verwendung eines Nahkommunikationsverfahrens (z.B. Bluetooth-Übertragung, Near-Field-Communication (NFC), Laser- oder Licht-basierte Datenübertragung, etc.) auf einem separaten Übertragungsweg, der unabhängig und parallel zur Leistungsübertragung vorgesehen ist, zum sekundärseitigen Leistungsregler übertragen.

Bevorzugt wird die Leistungsregelung mit Hilfe des bekannten und eingangs beschriebenen MPPT-Verfahrens und basierend auf den übertragenen Parametern durchgeführt.

Die Leistungsregelung selbst erfolgt über eine sekundärseitig wirkende Änderung einer Last. Diese Last wird derart angepasst, dass eine möglichst unterbrechungsfreie, maximierte Leistungsübertragung von der Photovoltaik-Anlage zur elektrischen Komponente sichergestellt ist.

Steht primärseitig mehr Leistung zur Verfügung als sekundärseitig benötigt wird, wird die Leistungsregelung begrenzt, beispielsweise wird eine Begrenzung auf eine feste, maximale Spannung als Regelziel vorgegeben.

Entsprechende Mischformen der beiden beschriebenen Ausgestaltungen zur Überwachung und Verwendung der Parameter sind möglich.

So können zur Leistungsregelung Parameter der Sekundärseite mit Parametern der Primärseite zur Leistungsregelung kombiniert und miteinander verwendet werden.

Zu diesen beiden Ausgestaltungen werden nachfolgend bevorzugte Weiterbildungen genannt.

In einer bevorzugten Weiterbildung ist die elektrische Komponente als Energiespeicher bzw. als Batterie ausgeführt.

Für diese Anwendung ist zwischen dem induktiven Übertrager und der Komponente ein steuerbarer DC/DC-Wandler vorgesehen, mit dessen Hilfe die Leistungsregelung über eine optimierte Spannungsanpassung erfolgt.

In einer bevorzugten Weiterbildung wird die elektrische Komponente als elektrische Last betrieben.

Auch für diese Anwendung ist zwischen dem induktiven Übertrager und der Komponente ein steuerbarer Wandler bzw. DC/DC-Wandler vorgesehen, mit dessen Hilfe die Leistungsregelung über eine optimierte Spannungsanpassung erfolgt.

In einer bevorzugen Weiterbildung wird die Leistungsübertragung langsam bzw. mit geringen Schrittweiten geregelt bzw. geändert, um eine bezüglich des Maximum Power Point MPP der Photovoltaik-Anlage optimierte Leistungsübertragung einzustellen.

Die Erfindung ermöglicht die Regelung einer Leistungsübertragung, die galvanisch getrennt über den induktiven Übertrager erfolgt. Dadurch wird ein Schutz vor gefährlichen Spannungen realisiert.

Die Erfindung ermöglicht eine optimierte Regelung der Leistungsübertragung, um sowohl kurzfristigen Änderungen an der Photovoltaik-Anlage, wie sie beispielsweise von Wolken verursacht werden, zu begegnen als auch um langfristigen Änderungen an der Photovoltaik-Anlage, wie sie beispielsweise am Abend zw. Morgen durch Dämmerung verursacht werden, zu begegnen.

Die von der Photovoltaik-Anlage gebildete Leistung schwankt. Bei einer erhöhten Leistungsentnahme bzw. Leistungsanforderung auf der Sekundärseite kann die Übertragung zusammenbrechen. Die Erfindung ermöglicht, die damit zusammenhängenden Verluste bzw. Folgen so gering als möglich zu halten bzw. diese zu reduzieren.

Die Erfindung ermöglicht somit eine verlustarme, schnelle, zuverlässige Regelung, die aufwandsarm bei geringen Kosten realisierbar ist.

Nachfolgend wird die vorliegende Erfindung beispielhaft anhand einer Zeichnung näher erläutert. Dabei zeigt:
- FIG 1: ein erstes Anwendungsbeispiel zur vorliegenden Erfindung,
- FIG 2: mit Bezug auf FIG 1 eine erste Kennlinien-Betrachtung zur vorliegenden Erfindung,
- FIG 3: mit Bezug auf FIG 1 und FIG 2 eine zweite Kennlinien-Betrachtung zur vorliegenden Erfindung,
- FIG 4: mit Bezug auf FIG 1 bis FIG 3 das zugehörige Ablaufdiagramm zur vorliegenden Erfindung,
- FIG 5: ein zweites, nicht mehr beanspruchtes Anwendungsbeispiel zur vorliegenden Erfindung.

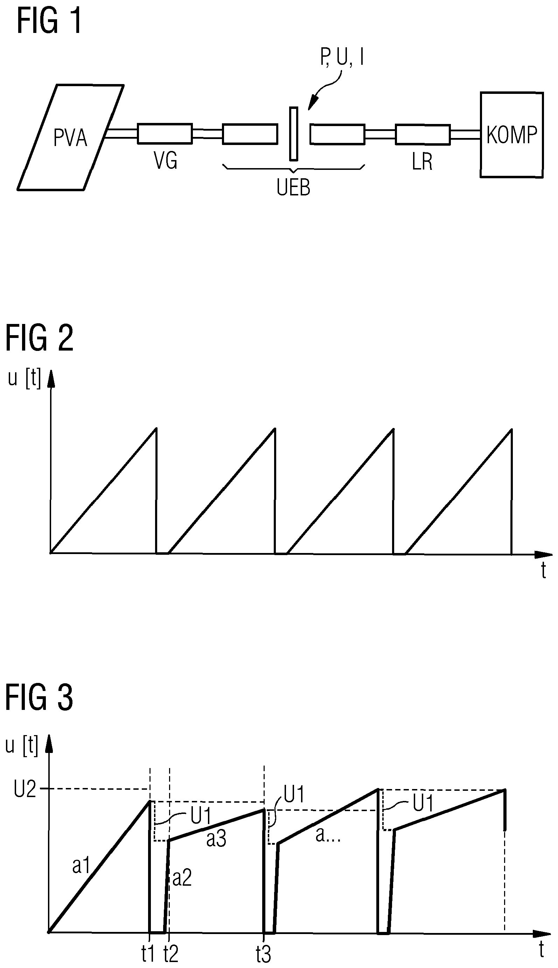

FIG 1 zeigt ein erstes Anwendungsbeispiel zur vorliegenden Erfindung.

Eine Photovoltaik-Anlage PVA ist an einer Außenseite eines Schienenfahrzeugs zur Energiegewinnung angeordnet, während eine elektrische Komponente KOMP, beispielswiese ein Verbraucher oder ein Energiespeicher, im Inneren des Schienenfahrzeugs angeordnet ist.

Aus Sicherheitsgründen erfolgt eine Leistungsübertragung von der Photovoltaik-Anlage PVA zur elektrischen Komponente KOMP über einen zwischengeschalteten induktiven Übertrager bzw. Transformator UEB.

Der induktive Übertrager UEB überträgt Gleichspannung auf Gleichspannung und beinhaltet dazu eine Serienschaltung aus einem DC/AC-Wandler, gefolgt von zwei induktiv miteinander gekoppelten Spulen und einem nachfolgenden AC/DC-Wandler.

Zwischen der Photovoltaik-Anlage PVA und dem Übertrager UEB kann ein Vorschaltgerät VG vorgesehen sein, mit dessen Hilfe eine Spannungsanpassung derart erfolgt, dass der induktive Übertrager in jedem Arbeitspunkt der Photovoltaik-Anlage PVA in einem optimalen Bereich betrieben wird.

Entsprechend kann zwischen der Photovoltaik-Anlage PVA und der Komponente KOMP ein DC/DC-Wandler als Nachschaltgerät (hier nicht dargestellt) vorgesehen sein.

Notwendige Vor- und Nachschaltgeräte für den Betrieb eines Übertragers in einem Gleichstromnetz sind bekannt und werden hier nicht detaillierter ausgeführt.

Zwischen dem induktiven Übertrager UEB und der elektrischen Komponente KOMP kann ein Leistungsregler LR geschaltet sein, mit dem die Leistungsregelung erfolgt, die bevorzugt als Spannungsregelung erfolgt.

Handelt es sich bei der elektrischen Komponente bzw. Last KOMP um einen Energiespeicher, ist zwischen dem induktiven Übertrager UEB und der Komponente KOMP ein DC/DC-Wandler als Leistungsregler LR geschaltet, mit dessen Hilfe die Leistungsregelung über eine optimierte Spannungsanpassung erfolgt.

Zwischen dem induktiven Übertrager UEB und der elektrischen Komponente KOMP erfolgt eine zeitliche Überwachung von elektrischen Parametern (Strom I, Spannung U und/oder Leistung P) der in Bezug auf den Übertrager UEB sekundärseitig zur Verfügung stehenden Leistung.

FIG 2 zeigt mit Bezug auf FIG 1 eine erste Kennlinien-Betrachtung zur vorliegenden Erfindung.

Wird auf der Sekundärseite des Übertragers UEB ohne erfindungsgemäße Regelung eine erhöhte Leistung abgenommen bzw. von der Komponente KOMP angefordert, kann eine über die Photovoltaik-Anlage PVA zur Verfügung gestellte Leistung diese Forderung ggf. nicht erfüllen. In Folge nimmt eine sekundärseitige Ausgangsspannung als Parameter einen Wert u(t) = 0V ein, die Spannung bricht ein.

Die Leistungsübertragung bricht zusammen und ein Neustart der Regelung zur Energie- bzw. Leistungsübertragung wird durchgeführt.

Wiederholt sich dieser Vorgang, ergibt sich die in FIG 1 dargestellte, typische Sägezahnkurve.

Die hier dargestellte Regelung der Leistungsübertragung ist zwar einfach, jedoch zeitintensiv und verlustbehaftet.

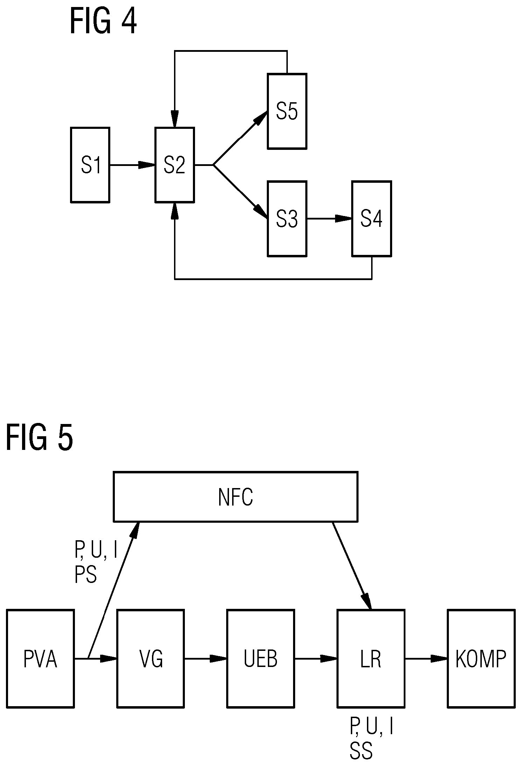

FIG 3 zeigt mit Bezug auf FIG 1 eine zweite Kennlinien-Betrachtung zur vorliegenden Erfindung, während FIG 4 mit Bezug auf FIG 3 das zugehörige Ablaufdiagramm zeigt.

Bei den nachfolgenden Betrachtungen wird die sekundärseitige Leistung durch eine Spannung U bzw. u(t) als Parameter repräsentiert.

In einem ersten Schritt wird zur sekundärseitigen Leistungsentnahme am induktiven Übertrager UEB für diese Leistung ein Startwert bestimmt. Beispielsweise wird dazu für eine Ausgangsspannung des Übertragers u(t<t1)=U1 ein Startwert vorgegeben, der die sekundärseitige Leistung repräsentiert.

In einem zweiten Schritt wird überprüft, ob die sekundärseitig angeforderte Leistung seitens des Übertragers UEB primärseitig auch geliefert werden kann.

Erfolgt am induktiven Übertrager UEB sekundärseitig ein Zusammenbruch der Ausgangsspannung u(t=t1)=0, dann steht primärseitig zu wenig Leistung zur Übertragung zur Verfügung. In diesem Fall wird ein nachfolgend geschilderter fünfter Schritt durchgeführt.

Erfolgt sekundärseitig jedoch kein Zusammenbruch der Ausgangsspannung u(t<t1) des induktiven Übertragers, dann steht primärseitig auseichend Leistung zur Übertragung zur Verfügung. In diesem Fall wird ein nachfolgend geschilderter dritter Schritt durchgeführt.

Im dritten Schritt wird geprüft, ob seitens der Komponente bzw. Last KOMP eine erhöhte Leistung verarbeitet werden könnte. Ist dies der Fall, wird ein nachfolgend beschriebener vierter Schritt durchgeführt.

Im vierten Schritt wird diese erhöhte Leistung bestimmt bzw. berechnet und mit Blick auf die Spannung u(t<t1)=U ein entsprechender neuer, erhöhter Startwert U1 verwendet.

Nachfolgend wird die geschilderte Schrittfolge beginnend beim zweiten Schritt erneut durchgeführt.

Im fünften Schritt, der bei der unterbrochenen Leistungsübertragung folgt, muss die sekundärseitige Leistungsentnahme reduziert werden.

Entsprechend wird ausgehend von der Spannung u(t1)=U2 ein neuer, kleinerer Startwert U1 bestimmt. Mit dieser reduzierten Spannung U1 (mit U1<U2) wird die geschilderte Schrittfolge beginnend beim zweiten Schritt erneut durchgeführt.

Sowohl die in Form einer linearen Rampe a1, a2, ... erfolgende Erhöhung als auch die oben geschilderte Reduzierung wird durch Algorithmen angepasst.

Dieser Ablauf der Schritte wird wiederholt, es ergeben sich die entsprechend gezeigten Verläufe a1, a2 für t2<t<t3, t=t3, t>t3.

Die Auszeiten nach dem Abschalten sind technologisch vom induktiven Übertrager bzw. Transformator (UEB) bedingt. Sie sind so gering wie möglich zu halten.

FIG 5 zeigt ein zweites, nicht mehr beanspruchtes Anwendungsbeispiel zur vorliegenden Erfindung.

Wieder ist die Photovoltaik-Anlage PVA an einer Außenseite eines Schienenfahrzeugs zur Energiegewinnung angeordnet, während die elektrische Komponente bzw. Last KOMP, beispielswiese ein Verbraucher oder ein Energiespeicher, im Inneren des Schienenfahrzeugs angeordnet ist.

Aus Sicherheitsgründen erfolgt die Leistungsübertragung von der Photovoltaik-Anlage PVA zur elektrischen Komponente KOMP über den zwischengeschalteten induktiven Übertrager bzw. Transformator UEB.

Seitens der Photovoltaik-Anlage PVA kann ein Vorschaltgerät VG vorgesehen sein, der zwischen der Photovoltaik-Anlage PVA und dem induktiven Übertrager bzw. Transformator UEB geschaltet ist.

Mit Hilfe des Vorschaltgeräte kann eine Spannungsanpassung erfolgen, um den induktiven Übertrager UEB in jedem Arbeitspunkt in einem optimalen Bereich zu betreiben.

Zwischen dem induktiven Übertrager bzw. Transformator UEB und der elektrischen Komponente KOMP kann ein Leistungsregler LR geschaltet sein, mit dem die Leistungsregelung durch Lastanpassung erfolgt.

Zwischen dem induktiven Übertrager UEB und der elektrischen Komponente KOMP erfolgt eine zeitliche Überwachung von elektrischen Parametern (Strom I, Spannung U und/oder Leistung P) der in Bezug auf den Übertrager sekundärseitig zur Verfügung stehenden Leistung.

Diese Parameter der Sekundärseite SS werden dem Leistungsregler LR zugeführt.

In der hier gezeigten zweiten Ausgestaltung der Erfindung wird die Leistungsregelung mit Hilfe des bekannten und eingangs beschriebenen MPPT-Verfahrens durchgeführt.

Die hierfür ebenfalls erforderlichen Parameter U, I und/oder P der Primärseite PS werden zwischen der Photovoltaik-Anlage PVA und dem induktiven Übertrager UEB zeitlich verfolgt und erfasst.

Die primärseitigen Parameter werden bevorzugt als Daten oder als repräsentierende Kennwerte unter Verwendung eines drahtlosen Übertragungsverfahrens NFC (Infrarot-Übertragung, Funkübertragung, Nahkommunikationsverfahren, Bluetooth, etc.) auf einem separaten Übertragungsweg, der unabhängig und parallel zur Leistungsübertragung über den induktiven Übertrager UEB vorgesehen ist, zur Sekundärseite SS bzw. zum Leistungsregler LR übertragen.

Basierend auf den primärseitig und auf den sekundärseitig gewonnenen Parametern U, I und/oder P wird dann die Leistungsregelung durch den Leistungsregler durchgeführt.

## Patentansprüche

1. Verfahren zur Regelung einer Leistungsübertragung,
- bei dem von einer Photovoltaik-Anlage elektrische Leistung gebildet wird und diese zu einer Primärseite eines induktiven Übertragers gelangt,
- bei dem die Leistung von der Primärseite des induktiven Übertragers zu einer Sekundärseite des induktiven Übertragers gelangt,
- bei dem die Leistung von der Sekundärseite des induktiven Übertragers an eine elektrische Komponente gelangt,
- bei dem die Photovoltaik-Anlage an einer äußeren Oberfläche eines Schienenfahrzeugs betrieben wird und bei dem die elektrische Komponente im Inneren des Schienenfahrzeugs betrieben wird,
- bei dem eine für die Leistungsübertragung zwischen der Photovoltaik-Anlage und der Komponente erforderliche Leistungsregelung sekundärseitig durchgeführt wird,
- bei dem die Leistungsregelung derart erfolgt, dass ein durch die elektrische Komponente vorgegebenes Regelziel erreicht wird,
- bei dem durch die Leistungsregelung bestimmt wird, wieviel Leistung vom Übertrager sekundärseitig entnommen und der Komponente zugeführt wird,
- bei dem zur Leistungsregelung elektrische Parameter verwendet werden, die ausschließlich zwischen dem induktiven Übertrager und der elektrischen Komponente erfasst, zeitlich verfolgt und ausgewertet werden,
- bei dem in einem ersten Schritt zur sekundärseitigen Leistungsentnahme am induktiven Übertrager für diese Leistung ein Startwert festgelegt bzw. bestimmt wird,
- bei dem in einem zweiten Schritt überprüft wird, ob die sekundärseitig angeforderte Leistung seitens des Übertragers primärseitig geliefert werden kann,
- bei dem für den Fall, dass sekundärseitig ein Zusammenbruch einer Ausgangsspannung des induktiven Übertragers erfolgt und damit angezeigt wird, dass primärseitig zu wenig Leistung zur Übertragung zur Verfügung steht, der nachfolgend geschilderter fünfte Schritt durchgeführt wird,
- bei dem für den Fall, dass sekundärseitig kein Zusammenbruch der Ausgangsspannung des induktiven Übertragers erfolgt und damit angezeigt wird, dass primärseitig auseichend Leistung zur Übertragung zur Verfügung steht, der nachfolgend geschilderte dritte Schritt durchgeführt wird,
- bei dem im dritten Schritt geprüft wird, ob seitens der Komponente eine erhöhte Leistung verarbeitbar ist, und bei dem für den Fall einer möglichen Verarbeitung einer erhöhten Leistung der nachfolgend beschriebene vierte Schritt durchgeführt wird,
- bei dem im vierten Schritt die erhöhte Leistung bestimmt und als neuer Startwert verwendet wird, und bei dem die geschilderte Schrittfolge beginnend beim zweiten Schritt erneut durchgeführt wird,
- bei dem im fünften Schritt die sekundärseitige Leistungsentnahme reduziert wird, indem ausgehend vom letzten Startwert dieser reduziert und als neuer Startwert verwendet wird, um dann die geschilderte Schrittfolge beginnend beim zweiten Schritt erneut durchzuführen.

2. Verfahren nach einem der vorhergehenden Ansprüche, bei dem der induktive Übertrager Gleichspannung auf Gleichspannung überträgt und dieser dazu eine Serienschaltung aus einem DC/AC-Wandler, gefolgt von zwei induktiv miteinander gekoppelten Spulen und gefolgt von einem AC/DC-Wandler beinhaltet.

3. Verfahren nach Anspruch 2, bei dem die beiden Spulen Eisenkernlos miteinander gekoppelt betrieben werden.

4. Verfahren nach Anspruch 1, bei dem die Komponente als Verbraucher oder Speicher betrieben wird.

5. Verfahren nach Anspruch 1, bei dem die Leistungsregelung über eine sekundärseitig wirkende Änderung einer Last vorgenommen wird.

6. Verfahren nach Anspruch 5, bei dem die Last derart angepasst wird, dass eine unterbrechungsarme, maximierte Leistungsübertragung von der Photovoltaik-Anlage zur elektrischen Komponente sichergestellt wird.

## Claims

1. Method for controlling a transmission of power,
- in which electrical power is formed by a photovoltaic installation and passes to a primary side of an inductive transformer,
- in which the power passes from the primary side of the inductive transformer to a secondary side of the inductive transformer,
- in which the power passes from the secondary side of the inductive transformer to an electrical component,
- in which the photovoltaic installation is operated on an outer surface of a rail vehicle and in which the electrical component is operated inside the rail vehicle,
- in which a power control necessary for the transmission of power between the photovoltaic installation and the component is carried out on the secondary side,
- in which the power control is carried out in such a way that a control target predetermined by the electrical component is achieved,
- in which the power control determines how much power is drawn from the secondary side of the transformer and supplied to the component,
- in which electrical parameters are used for the power control, which are exclusively captured between the inductive transformer and the electrical component, tracked over time and evaluated,
- in which, in a first step, for the secondary-side draw of power at the inductive transformer, a starting value is established or determined for this power,
- in which, in a second step, a check is carried out to determine whether the power demanded on the secondary side can be delivered by the primary side of the transformer,
- in which, if an output voltage of the inductive transformer collapses on the secondary side and this indicates that too little power is available on the primary side for transmission, the fifth step that is described below is carried out,
- in which, if the output voltage of the inductive transformer does not collapse on the secondary side and this indicates that sufficient power is available on the primary side for transmission, the third step that is described below is carried out,
- in which, in the third step, a check is carried out to determine whether an increased power is able to be processed by the component, and in which, if it is possible to process an increased power, the fourth step that is described below is carried out,
- in which, in the fourth step, the increased power is determined and used as a new starting value, and in which the described step sequence is carried out again starting with the second step,
- in which, in the fifth step, the secondary-side draw of power is reduced by, proceeding from the last starting value, reducing the starting value and using same as a new starting value in order to then carry out the described step sequence again starting with the second step.

2. Method according to one of the preceding claims, in which the inductive transformer transforms DC voltage to DC voltage and for this purpose contains a series circuit comprising a DC/AC converter followed by two coils inductively coupled to one another and followed by an AC/DC converter.

3. Method according to Claim 2, in which the two coils are operated in a manner coupled to one another without an iron core.

4. Method according to Claim 1, in which the component is operated as a consumer or a storage unit.

5. Method according to Claim 1, in which the power control is performed by way of a load change that acts on the secondary side.

6. Method according to Claim 5, in which the load is adjusted so as to ensure a maximized transmission of power from the photovoltaic installation to the electrical component with few interruptions.

## Revendications

1. Procédé de commande d'une transmission de puissance,
- dans lequel une installation photovoltaïque produit de l'énergie électrique qui est acheminée vers le côté primaire d'un transformateur inductif,
- dans lequel la puissance est transmise depuis le côté primaire du transformateur inductif vers le côté secondaire du transformateur inductif,
- dans lequel la puissance est transmise du côté secondaire du transformateur inductif à un composant électrique,
- dans lequel l'installation photovoltaïque est exploitée sur une surface extérieure d'un véhicule ferroviaire et dans lequel le composant électrique est exploité à l'intérieur du véhicule ferroviaire,
- dans lequel la commande de puissance nécessaire à la transmission de puissance entre l'installation photovoltaïque et le composant est effectuée du côté secondaire,
- dans lequel la commande de puissance s'effectue de telle sorte qu'un objectif de commande prédéfini par le composant électrique est atteint,
- dans lequel la commande de puissance détermine la quantité de puissance prélevée du côté secondaire du transformateur et acheminée au composant,
- dans lequel des paramètres électriques sont utilisés pour commander la puissance, lesquels sont exclusivement saisis, suivis dans le temps et analysés entre le transformateur inductif et le composant électrique,
- dans lequel, lors d'une première étape, une valeur de départ est fixée ou déterminée pour la transmission de puissance secondaire au niveau du transformateur inductif pour cette puissance,
- dans lequel, lors d'une deuxième étape, il est vérifié si la puissance demandée côté secondaire peut être fournie côté primaire par le transformateur,
- dans lequel, dans le cas où une chute de la tension de sortie du transformateur inductif se produit du côté secondaire, indiquant ainsi qu'il n'y a pas assez de puissance disponible du côté primaire pour la transmission, la cinquième étape décrite ci-dessous est exécutée,
- dans lequel, dans le cas où il n'y a pas de chute de la tension de sortie du transformateur inductif du côté secondaire, indiquant ainsi qu'il y a suffisamment de puissance disponible du côté primaire pour la transmission, la troisième étape décrite ci-dessous est exécutée,
- dans lequel, lors de la troisième étape, il est vérifié si le composant est capable de traiter une puissance accrue et, dans le cas où un traitement d'une puissance accrue est possible, la quatrième étape décrite ci-dessous est exécutée,
- dans lequel, lors de la quatrième étape, la puissance accrue est déterminée et utilisée comme nouvelle valeur de départ, dans lequel la séquence d'étapes décrite est répétée à partir de la deuxième étape,
- dans lequel, lors de la cinquième étape, la puissance absorbée côté secondaire est réduite en la diminuant à partir de la dernière valeur de départ et en l'utilisant comme nouvelle valeur de départ, afin de répéter ensuite la séquence d'étapes décrite en commençant par la deuxième étape.

2. Procédé selon l'une des revendications précédentes, dans lequel le transformateur inductif convertit une tension continue en tension continue et comprend à cet effet un montage en série composé d'un convertisseur CC/CA, suivi de deux bobines couplées de manière inductive entre elles, puis d'un convertisseur CA/CC.

3. Procédé selon la revendication 2, dans lequel les deux bobines sont exploitées en étant couplées entre elles sans noyau de fer.

4. Procédé selon la revendication 1, dans lequel le composant est utilisé comme consommateur ou accumulateur.

5. Procédé selon la revendication 1, dans lequel la commande de puissance s'effectue par une modification d'une charge qui agit du côté secondaire.

6. Procédé selon la revendication 5, dans lequel la charge est ajustée de manière à garantir une transmission de puissance maximisée et fiable entre l'installation photovoltaïque et le composant électrique.
